# EUROPEAN PATENT APPLICATION

(11) **EP 4 169 647 A1**
(43) Date of publication of application: **26.04.2023**
(21) Application number: 21864087.8
(22) Date of filing: 16.08.2021
(51) Int. Cl.: B23K 1/00, B23K 1/19, B23K 101/14, B23K 103/10, C22C 21/00, C22C 21/02, F28F 1/02, F28F 1/32, F28F 21/08, C22F 1/00, C22F 1/04, B23K 35/22, B23K 35/28, B23K 35/363, F28F 19/02

(54) **ALUMINUM ALLOY EXTRUDED TUBE AND HEAT EXCHANGER**

(30) Priority: 02.09.2020 JP 2020147697
(71) Applicant: UACJ Corporation, Chiyoda-ku Tokyo 100-0004 (JP)
(72) Inventor: SUZUKI, Taichi, Tokyo 100-0004 (JP); TOMORI, Ryo, Tokyo 100-0004 (JP); KUMAGAI, Hidetoshi, Tokyo 100-0004 (JP)
(74) Representative: Kramer Barske Schmidtchen Patentanwälte PartG mbB
(86) International application number: PCT/JP2021/029859
(87) International publication number: WO 2022/050029

(57) **Abstract**

Provided is an extruded aluminum alloy tube for a heat exchanger that is an extruded tube formed of an aluminum alloy used for an automotive heat exchanger, the extruded aluminum alloy tube comprising: a tube main body formed of an aluminum alloy comprising Mn; and a coating film formed on a surface of the tube main body, in which the coating film comprises an Al-Si alloy brazing material powder, a Zn-free fluoride-based flux powder, and a binder, and an average grain size of the tube main body after a heating test is 150 µm or more in the heating test in which the average grain size is measured after the extruded aluminum alloy tube is maintained at 600°C ± 10°C for 3 minutes and cooled to room temperature. The present invention can provide an extruded aluminum alloy tube for an automotive heat exchanger in which fins and the tube are jointed without reducing the tube wall thickness during brazing, brazeability is excellent, and excellent corrosion resistance is provided by having difficulty in falling-off of the fins over a long period of time and protecting the tube from corrosion by the fins.

## Description

### TECHNICAL FIELD

The present invention relates to an extruded tube formed of an aluminum alloy used in an automotive heat exchanger and a heat exchanger using the extruded tube.

### BACKGROUND ART

Aluminum alloy heat exchangers for automotive applications such as evaporators and condensers frequently use aluminum alloys that are light weight and have high thermal conductivity. The heat exchangers have tubes in which coolant flows and fins for heat exchange between the coolant and the air outside the tube. The tubes and fins are jointed by brazing. A fluoride-based flux is frequently used for brazing the tubes to the fins.

In order to exchange heat as described above, the tube used in the automotive heat exchanger is jointed to the fins by brazing and thus a brazing material is required to be provided on a fin side or a tube side. Therefore, a clad material to which the brazing material is cladded on the fin side or the tube side is frequently used. Consequently, a problem of increasing the production cost of the clad material and material cost has arisen.

In the case where the clad material in which the brazing material is provided on the fin side is used, it is difficult to reduce the production cost and the material cost because the used amount of a fin material is large compared to the used amount of a tube material. In contrast, in the case where the brazing material is provided on the tube side, there is room for cost reduction because the clad material is not required to be used for the fin material.

As a conventional technology for providing the brazing material on the tube side, for example, a technology of forming a flux layer including a Si (silicon) powder, a Zn-containing flux, and a binder on the tube outer surface has been developed (Patent Literature 1). The flux layer including the above composition allows all of the brazing material, Zn, and the flux components to be simultaneously attached in a single attaching process. In addition, the fins can be prepared using a bare fin material because the brazing material is not required to be provided on the fin side. As the results of these developments, the cost reduction can be performed.

Herein, in the case where a Zn-containing compound such as KZnF₃ is used as a flux as the flux layer described in Patent Literature 1, the flux component and Zn are generated by the following reaction formula.

6KZnF₃ + 4Al → 3KAlF₄ + K₃AlF₆ + 6Zn

(555°C or more)

From the above reaction formula, the Zn-containing flux does not function as Zn and the flux component by itself alone but functions as Zn and the flux component by reacting with Al (aluminum) in the tube to deposit Zn and to generate potassium fluoroaluminate serving as the flux component. Therefore, in the case where the Zn-containing flux is used, the above reaction proceeds at the interface between the flux layer and the tube, that is, in the vicinity of the outer surface of the tube.

In addition, a technology using an alloy powder including Si serving as a brazing material powder has also been developed in Patent Literature 2.

### CITATION LIST

### PATENT LITERATURE

Patent Literature 1: WO 2011/090059
Patent Literature 2: Japanese Patent Publication 2018-118318-A

### SUMMARY OF INVENTION

### Technical Problem

In recent years, in order to reduce environmental load, the demand of improving the fuel efficiency of automobiles by reducing the weight of component parts and the demand of reducing the used amount of materials as products by extending the service life of the parts have increased. Therefore, using a tube having a wall thickness thinner than that of conventional tubes and having corrosion resistance of the tube higher than that of the conventional tube in a heat exchanger using such a tube have been strongly required.

This means not only that the tube having a thinner wall thickness can be formed but also that the tube itself has a sacrificial corrosion protection action and at the same time the tube surface is required to be protected from corrosion over a long period of time without falling-off of the fins from the tube surface even after the tube is subjected to a corrosive environment.

In the method described in Patent Literature 1, however, the pure Si powder included in a coating is eutectically melted with aluminum at the tube surface to form Al-Si alloy liquid-phase brazing substance, which causes a part of the tube surface to be consumed as a brazing substance. Therefore, a certain tube wall thickness is required to be secured in order to prevent tube penetration during heating for brazing. Therefore, it is difficult to say that this method contributes to forming a tube having a thinner wall thickness.

In addition, the pure Si powder included in the coating causes the liquid-phase brazing substance of the Al-Si alloy generated by eutectic melting with aluminum at the tube surface to flow to a contact part between the fin and the tube, resulting in forming fillets. At this time, mixing of coarse Si particles causes the liquid-phase brazing substance formed by eutectically melting the surface of the coarse Si particles and the aluminum at the tube surface to quickly flow to the contact part between the fin and the tube by capillary action. Consequently, the surroundings of the Si particles that have become smaller detach from the tube surface and form recessed parts on the tube surface from which the liquid-phase brazing substance has flowed out, resulting in promoting further eutectic melting at the bottoms of the recessed parts contacting to the Si particles. This may form deep melted holes and thus through holes may be generated through the tube main body.

In Patent Literature 1, the above problems have been addressed by using Si powder in which the content of coarse particles in which the cumulative volume of particles having a particle diameter equal to or less than the diameter of the coarse particles is five times or more than the cumulative volume of particles having a particle diameter that 99% of the total particles has (99% particle diameter, D99) is less than 1 ppm. However, another problem in order to reduce the contamination of the coarse particles to less than 1 ppm arises.

In addition, the reaction in which Zn precipitates at the tube outer surface immediately before the liquid phase is generated by the above-described flux reaction proceeds and thus the generated liquid phase comprises a high concentration of Zn. While this Zn diffuses to the tube outer surface to form a Zn diffusion layer and this layer acts as a sacrificial corrosion protection layer to improve the corrosion resistance of the tube, this Zn is concentrated in the fillets formed between the fin and the tube. In this case, the fillets are preferentially corroded and worn out when the fillets are exposed to a corrosive environment due to the potential of the fillet being the most less-noble. This phenomenon causes the fins to fall off, heat exchange performance to early deteriorate, and the corrosion of the tube not to be protected by the fins. This means that the premature penetration of the tube may be caused.

In the method described in Patent Literature 2, an Al-Si alloy powder has been exemplified as an alloy including Si among the brazing material powders. In the case where the Al-Si alloy powder is used as the brazing material to a coated tube, erosion may occur at the tube surface unlike the case of the pure Si powder, and the tube wall may become thin during brazing. This technology, however, has not described countermeasures for this problem and thus it is difficult to say that this technology is practical.

Therefore, an object of the present invention is to provide an extruded aluminum alloy tube of an automotive heat exchanger having excellent corrosion resistance by eliminating the risk of generating through holes in the tube caused by coarse Si particles during brazing as well as jointing the fins and the tube without reducing the tube wall thickness, having excellent brazeability, having difficulty in falling-off of the fins over a long period of time, and protecting the tube from corrosion by the fins and a heat exchanger using the extruded aluminum alloy tube.

### Solution to Problem

As a result of intensive study for solving the above problems, the inventors of the present invention have found that, in an extruded aluminum alloy tube comprising a tube main body and a coating film applied onto a surface of the tube main body, the tube main body formed of an aluminum alloy having a grain structure so that an average grain size is 150 µm or more in a heating test in which the average grain size is measured after the extruded aluminum alloy tube is maintained at 600°C ± 10°C for 3 minutes and cooled to room temperature is adopted, and a brazing material powder formed of an Al-Si alloy and a Zn-free fluoride-based flux powder are applied onto the surface of the tube, whereby the tube wall thickness is not reduced during brazing and erosion is difficult to occur during brazing because the tube surface is not melted during brazing and thus the brazeability is excellent and Zn does not concentrate in the fillets after the brazing because the material comprising Zn is not used, and thus have accomplished the present invention.

The above problems of the present invention are solved by the following present invention.

Namely, the present invention (1) provides an extruded aluminum alloy tube for a heat exchanger that is an extruded tube formed of an aluminum alloy used for an automotive heat exchanger, the extruded aluminum alloy tube comprising:
a tube main body formed of an aluminum alloy comprising Mn; and
a coating film formed on a surface of the tube main body, in which
the coating film comprises an Al-Si alloy brazing material powder, a Zn-free fluoride-based flux powder, and a binder, and
an average grain size of the tube main body after a heating test is 150 µm or more in the heating test in which the average grain size is measured after the extruded aluminum alloy tube is maintained at 600°C ± 10°C for 3 minutes and cooled to room temperature.

The present invention (2) also provides the extruded aluminum alloy tube for a heat exchanger as described in (1), in which the aluminum alloy comprising Mn comprises 0.20 to 0.90 mass % of Mn, and has a Ti content of 0.10 mass % or less, with a balance being Al and inevitable impurities.

The present invention (3) also provides the extruded aluminum alloy tube for a heat exchanger according to (1) or (2), in which an applied amount of the Al-Si alloy brazing material powder is 10.0 to 25.0 g/m², an applied amount of the Zn-free fluoride-based flux powder is 3.0 to 12.0 g/m², and an applied amount of the binder is 1.0 to 13.0 g/m².

The present invention (4) also provides a heat exchanger comprising:
a brazing joint product of the extruded aluminum alloy tube for a heat exchanger as described in any one of (1) to (3); and
fins formed of an aluminum alloy comprising Zn, in which
an average grain size of the aluminum alloy forming the tube main body is 150 µm or more.

### Advantageous Effect of Invention

According to the present invention, an extruded aluminum alloy tube for an automotive heat exchanger in which fins and a tube are jointed without reducing the tube wall thickness during brazing, brazeability is excellent, and excellent corrosion resistance is provided by having difficulty in falling-off of the fins over a long period of time and protecting the tube from corrosion by the fins, and a heat exchanger using the extruded aluminum alloy tube can be provided.

### BRIEF DESCRIPTION OF DRAWING

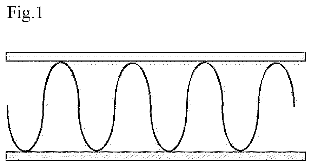

FIG. 1 is a schematic view illustrating a mini-core to be prepared in Example.

### DESCRIPTION OF EMBODIMENTS

The extruded aluminum alloy tube according to the present invention is an extruded tube formed of an aluminum alloy used for an automotive heat exchanger, the extruded aluminum alloy tube comprising:
a tube main body formed of an aluminum alloy comprising Mn; and
a coating film formed on a surface of the tube main body, wherein
the coating film comprises an Al-Si alloy brazing material powder, a Zn-free fluoride-based flux powder, and a binder, and
an average grain size of the tube main body after a heating test is 150 µm or more in the heating test in which the average grain size is measured after the extruded aluminum alloy tube is maintained at 600°C ± 10°C for 3 minutes and cooled to room temperature.

The extruded aluminum alloy tube for a heat exchanger according to the present invention is a tube made of an aluminum alloy that is formed of the aluminum alloy and prepared by extrusion forming the aluminum alloy. The extruded aluminum alloy tube according to the present invention is used for a tube in which a coolant is flowed in an automotive heat exchanger by being brazed with fins and the like.

The extruded aluminum alloy tube according to the present invention comprises a tube main body formed of an aluminum alloy comprising Mn and a coating film formed on the surface of the tube main body.

The tube main body of the extruded aluminum alloy tube according to the present invention is formed of the aluminum alloy comprising Mn. Mn has the action of increasing strength by causing solid solution in an aluminum mother phase and also has the effect of making the potential noble.

The aluminum alloy comprising Mn that forms the tube main body is preferably an aluminum alloy comprising 0.20 to 0.90 mass % of Mn, having a Ti content of 0.10 mass % or less, with a balance being Al and inevitable impurities.

In the aluminum alloy comprising Mn that forms the tube main body, the Mn content is preferably 0.20 to 0.90 mass % and more preferably 0.30 to 0.80 mass %. The Mn content in the aluminum alloy comprising Mn within the above range allows sufficient strength improvement effect and the effect of making the potential noble in the deep part of the tube to be obtained. On the other hand, a Mn content in the aluminum alloy of less than the above range results in the difficulty of obtaining the above effects. The Mn content of more than the above range causes Al-Mn precipitated product to be generated in the mother phase at the process before hot working as described below. This may suppress grain boundary migration and thus a fine grain structure after brazing may be formed, resulting in generating defects in brazing described above. In addition, the workability of the extrusion may deteriorate and thus the productivity of the tube main body may be low.

In the aluminum alloy comprising Mn that forms the tube main body, the Ti content is preferably 0.10 mass % or less and more preferably 0.001 to 0.08 mass %. The Ti content in the aluminum alloy comprising Mn within the above range allows the structure during casting to be finer. On the other hand, a Ti content in the aluminum alloy of more than the above range may cause giant grains to be generated during casting and thus a sound tube main body may be difficult to produce. In the case of an extruded multi-hole tube, grain-formed Ti may cause friction between Ti and a die to reduce productivity and tool life.

As the tube main body, a preferable tube main body is obtained by performing hot extrusion using an aluminum alloy ingot casted so that the ingot is adjusted to chemical composition of the aluminum alloy comprising Mn described above, that is, an aluminum alloy obtained by subjecting an ingot of the aluminum alloy that comprises 0.20 to 0.90 mass % and preferably 0.30 to 0.80 mass % of Mn, and has a Ti content of 0.10 mass % or less and preferably 0.001 to 0.08 mass %, with the balance being Al and inevitable impurities to the following homogenization treatment.

Examples of the homogenization treatment include the following first aspect homogenization treatment and second aspect homogenization treatment.

In the first aspect homogenization treatment, an aluminum alloy ingot having a predetermined chemical composition is maintained at 400 to 650°C for 2 hours or more. The treatment temperature in the first aspect homogenization treatment is 400 to 650°C and preferably 430 to 620°C. The treatment temperature of the homogenization treatment within the above range allows coarse grain products formed during casting to be decomposed or granulated and non-homogeneous structures such as segregation layers generated during casting to be homogenized. As a result, resistance during the extrusion can be reduced to improve extrudability and the size of the surface roughness of the product after extrusion can be reduced. On the other hand, a treatment temperature of the homogenization treatment of less than the above range may cause the coarse grain product and the above non-homogeneous structure to remain and thus the extrudability may deteriorate and the surface roughness may increase. In addition, a treatment temperature of the homogenization treatment of more than the above range may cause the ingot to melt. The treatment time of the homogenization treatment is 2 hours or more and preferably 5 hours or more. The treatment time of the homogenization treatment within the above range allows the homogenization to be sufficient. The treatment time of the homogenization treatment is preferably 24 hours or less because the effect of the homogenization is saturated when the treatment time exceeds 24 hours.

With respect to the second aspect homogenization treatment, the first aspect homogenization treatment in which the aluminum alloy ingot having a predetermined chemical composition is maintained at 550 to 650°C for 2 hours or more is performed and, after performing the first homogenization treatment, the second homogenization treatment in which the aluminum alloy ingot is maintained at 400 to 550°C for 3 hours or more is performed.

The treatment temperature in the first homogenization treatment according to the second aspect homogenization treatment is 550 to 650°C and preferably 580 to 620°C. The treatment temperature of the first homogenization treatment within the above range allows the coarse grain product formed during casting to be decomposed or granulated and a solid solution to be actively caused again. On the other hand, a treatment temperature of the first homogenization treatment of less than the above range results in difficulty in causing solid solution again, whereas a treatment temperature of more than the above range may cause the ingot to melt. The treatment time of the first homogenization treatment is 2 hours or more and preferably 5 hours or more. The treatment time of the homogenization treatment within the above range allows the above effect to be sufficient. The treatment time of the homogenization treatment is preferably 24 hours or less because the effect of the homogenization is saturated when the treatment time exceeds 24 hours.

The treatment temperature in the second homogenization treatment according to the second aspect homogenization treatment is 400 to 550°C. The treatment temperature of the second homogenization treatment within the above range allows Mn in solid solution in the mother phase to precipitate and the solid solubility of Mn to be reduced. As a result, deformation resistance in the extrusion can be reduced and extrudability can be improved. On the other hand, a treatment temperature of the second homogenization treatment of less than the above range results in a smaller precipitation amount of Mn and thus the effect of lowering the deformation resistance may be insufficient, whereas the treatment temperature of more than the above range results in difficulty in precipitation of Mn and thus the deformation resistance may be lowered. The treatment time of the second homogenization treatment is 3 hours or more and preferably 5 hours or more. A treatment time of the second homogenization treatment of less than the above range may result in insufficient precipitation of Mn and may cause the effect of lowering the deformation resistance to be insufficient. With respect to the treatment time of the homogenization treatment, longer time is more effective because the reaction proceeds. Excessively long treatment time, however, results in saturating the effect and thus 24 hours or less is preferable and 15 hours or less is particularly preferable.

At the second aspect homogenization treatment, the first homogenization treatment and the second homogenization treatment may be performed consecutively or the ingot may be cooled once after the first homogenization treatment and thereafter the second homogenization treatment may be performed. The phrase "the first homogenization treatment and the second homogenization treatment are performed consecutively" means that after the first homogenization treatment is completed, the second homogenization treatment is started when the temperature of the second homogenization treatment reaches to the treatment temperature of the second homogenization treatment without cooling the temperature of the ingot to a temperature lower than the treatment temperature of the second homogenization treatment. In the case where the ingot once cooled after the first homogenization treatment is performed and thereafter the second homogenization treatment, for example, after the first homogenization treatment is performed, the ingot is cooled to 200°C or less, and thereafter the ingot is heated again to perform the second homogenization treatment.

The form of the tube main body is not particularly limited and is appropriately selected depending on the application and required characteristics. Examples of the tube main body include an extruded flat multi-hole tube that is formed by extrusion, has a plurality of coolant channels inside, and has a flat shape in a cross-section perpendicular to the extrusion direction. The tube main body may have, for example, a simple cylindrical shape or other shapes. The tube having a cylindrical shape may be produced by extrusion.

The coating film on the extruded aluminum alloy tube according to the present invention is formed on the surface of the tube main body. The coating film comprises the Al-Si alloy brazing material powder, the Zn-free fluoride-based compound flux powder, and the binder.

The Al-Si alloy brazing material powder is an alloy of Al and Si in the form of powder. The Al-Si alloy brazing material powder melts only by the Al-Si alloy brazing material powder itself when heated during brazing and generates a liquid phase brazing substance on the tube outer surface. This allows the tube to be jointed to the fins and a header. With respect to a Si powder alone, a part of Al on the tube outer surface is melted due to generation of a brazing substance by eutectic melting, whereas the Al-Si alloy brazing material powder comprises Al and thus melting of the tube outer surface caused by the brazing material during brazing is difficult to occur.

In the alloy of Al and Si constituting the Al-Si alloy brazing material powder, the Si content is preferably 5.0 to 20.0 mass % and particularly preferably 7.0 to 15.0 mass %. The Si content in the alloy of Al and Si within the above range allows tube wall thickness reduction due to melting of the tube outer surface during brazing to be difficult to occur and brazeability to be improved.

The applied amount of the Al-Si alloy brazing material powder is preferably 10.0 to 25.0 g/m² and particularly preferably 12.0 to 20.0 g/m². The applied amount of the Al-Si alloy brazing material powder within the above range allows the brazeability to be excellent. On the other hand, an applied amount of the Al-Si alloy brazing material powder of less than the above range results in the insufficient amount of the liquid-phase brazing substance, which causes joint defects to be likely to occur, whereas an applied amount of more than the above range results in an excessively thick coating film thickness, which causes the core dimension to change after brazing and thus the brazeability to be likely to deteriorate.

The Zn-free fluoride-based flux powder functions as a flux during brazing, melts during heating for brazing to break down the oxide film on the Al-Si alloy brazing material powder and the tube outer surface, and allows brazing to immediately proceed after generating the liquid phase brazing substance. Zn-free fluoride-based flux powder is a fluoride in the form of powder and not including Zn. In the present invention, the term "Zn-free" or "not including Zn" means that the amount of Zn is less than the lower limit of detection in the analysis using an electron beam microanalyzer.

Examples of the Zn-free fluoride compound constituting the Zn-free fluoride-based flux powder include K-Al-F-based compounds such as KAlF₄, K₂AlF₅, and K₃AlF₆. In addition to these compounds, fluxes such as CaF₂ and LiF may be exemplified as the Zn-free fluorides.

The applied amount of the Zn-free fluoride-based flux powder is preferably 3.0 to 12.0 g/m² and particularly preferably 4.0 to 10.0 g/m². The applied amount of Zn-free fluoride-based flux powder within the above range allows the breakdown effect of the oxide film during brazing to be sufficient. On the other hand, an applied amount of the Zn-free fluoride-based flux powder of less than the above range results in insufficient breakdown of the oxide film due to the shortage of the flux component, which causes the brazeability to be likely to deteriorate, whereas an applied amount of more than the above range results in an excessively thick coating film thickness, which causes the core dimensions to change after brazing and thus the brazeability to be likely to deteriorate.

The binder attaches the Al-Si alloy brazing material powder and the Zn-free fluoride-based flux powder to the surface of the tube main body. Examples of the binders include acrylic resins and urethane-based resins.

The applied amount of the binder is preferably 1.0 to 13.0 g/m². The amount of the applied binder within the above range allows the Al-Si alloy brazing material powder and the Zn-free fluoride-based flux powder to excellently attach to the surface of the tube main body. On the other hand, an applied amount of the binder of less than the above range causes the peeling of the coating film to be easily occur, whereas an applied amount of the binder of more than the above range results in insufficient thermal decomposition of the binder and thus an undecomposed binder and the like may remain at the time of brazing, which may deteriorate the brazeability.

Examples of the method of forming the coating film on the surface of the tube main body includes a method of mixing the Al-Si alloy brazing material powder, the Zn-free fluoride-based flux powder, and the binder in a solvent, applying the resultant paste to the surface of the tube main body, and thereafter drying to remove the solvent, whereby the coating film is formed. Before the Al-Si alloy brazing material powder and the Zn-free fluoride-based flux powder are mixed in a solvent, the Al-Si alloy brazing material powder and Zn-free fluoride-based flux powder may be previously mixed to form a mixture powder of the Al-Si alloy brazing material powder and the Zn-free fluoride-based flux powder and thereafter the resultant mixed powder may be mixed in the solvent with the binder. As the application of the above paste to the surface of the tube main body, for example, a roll coating method or the like is used.

The extruded aluminum alloy tube for a heat exchanger according to the present invention has an average grain size of the tube main body after the heating test of 150 µm or more in the heating test in which the average grain size is measured after the extruded aluminum alloy tube is maintained at 600°C ± 10°C for 3 minutes and cooled to room temperature. In other words, the extruded aluminum alloy tube for a heat exchanger according to the present invention has a crystalline structure so that the average grain size of the tube main body is 150 µm or more by maintaining the extruded aluminum alloy tube at 600°C ± 10°C for 3 minutes and cooling to room temperature. The average grain size of the tube main body of 150 µm or more when the extruded aluminum alloy tube for a heat exchanger is subjected to the heating test in which the average grain size is measured after the extruded aluminum alloy tube is maintained at 600°C ± 10°C for 3 minutes and cooled to room temperature allows what is called erosion in which the liquid phase brazing substance erodes the grain boundary to be difficult to occur during heating for brazing, a decrease in tube thickness and tube penetration to be difficult to occur, and joint defects due to a decrease in the amount of the brazing substance to be difficult to occur, resulting in excellent brazeability.

In a tube main body having an average grain size of 150 µm or more after the heating test for the extruded aluminum alloy tube for a heat exchanger according to the present invention, the erosion is difficult to occur during heating for brazing because the average grain size before heating for brazing is large enough to such a degree that the erosion is difficult to occur during heating for brazing. Therefore, in the heating test in which the average grain size is measured after the extruded aluminum alloy tube is maintained at 600°C ± 10°C for 3 minutes and cooled to room temperature, the extruded aluminum alloy tube for a heat exchanger according to the present invention in which the average grain size of the tube main body after the heating test is 150 µm or more is difficult to cause erosion during heating for brazing.

The heating test for the extruded aluminum alloy tube for a heat exchanger according to the present invention is a test in which the heating test of firstly heating the extruded aluminum alloy tube for a heat exchanger according to the present invention to raise the temperature, heating to a holding temperature of 600°C ± 10°C during the temperature rising process, and subsequently, maintaining the temperature at 600°C ± 10°C for 3 minutes, and then cooling to room temperature is performed, and subsequently the average grain size of the tube main body of the extruded aluminum alloy tube for a heat exchanger after the heating test is measured. Examples of the measurement method of the average grain size of the tube main body include a method of electropolishing a test specimen and thereafter obtaining microscopic images of each cross-section using a polarizing microscope with a magnification of 50 to 100 times to measure the equivalent circular diameter. With respect to the rate of temperature rising during the temperature rising process in the heating test, the rate of temperature rising is 30 ± 10°C/min in average in the temperature range up to 500°C and the rate of temperature rising is 10 ± 5°C/min in average in the temperature range equal to or more than 500°C.

The tube main body of the extruded aluminum alloy tube for a heat exchanger according to the present invention of which average grain size after the heating test is 150 µm or more is obtained by using the aluminum alloy setting the Mn content to a predetermined content, preferably including 0.20 to 0.90 mass % of Mn, having a Ti content of 0.10 mass % or less, with the balance being Al and inevitable impurities as the aluminum alloy ingot subjected to hot extrusion, and more preferably further subjecting the aluminum alloy ingot to the above homogenization treatment before subjecting to the hot extrusion and reducing introduced processing strain by setting the ingot temperature during the hot extrusion to 480°C or more.

The extruded aluminum alloy tube for a heat exchanger according to the present invention has higher strength than that of a tube of which tube main body is formed of pure aluminum because the tube main body is formed of the aluminum alloy comprising Mn. In addition, the extruded aluminum alloy tube for a heat exchanger according to the present invention is formed the aluminum alloy comprising Mn and Mn is solid-soluted in the aluminum mother phase. Therefore, the potential of the tube main body becomes noble in the deep part as compared to a tube of which tube main body is formed of pure aluminum and the potential difference to the fin material and the tube surface tends to be larger as described below, so that this is advantageous from the viewpoint of preventing corrosion penetration of the tube main body.

The extruded aluminum alloy tube for a heat exchanger according to the present invention has excellent brazeability and corrosion resistance due to exhibiting each function of each powder and exhibiting a synergistic effect by interacting with each other by comprising the Al-Si alloy brazing material powder and the Zn-free fluoride-based flux powder in the coating film and comprising the Al-Si alloy brazing material powder in an applied amount of preferably 10.0 to 25.0 g/m² and particularly preferably 12.0 to 20.0 /m² and the Zn-free fluoride-based flux powder in an applied amount of 3.0 to 12.0 g/m² and particularly preferably 4.0 to 10.0 g/m².

In the extruded aluminum alloy tube for a heat exchanger according to the present invention, the Al-Si alloy brazing material powder comprised in the coating film melts as the Al-Si alloy brazing material powder itself alone and the liquid phase brazing substance is generated at the tube outer surface by heating during brazing. Consequently, the tube can be jointed to the fins and the header and the tube wall thickness is not reduced during brazing, and thus a thinner tube can be formed.

In the extruded aluminum alloy tube for a heat exchanger, some of Si in the Al-Si alloy brazing material powder comprised in the coating film diffuse from the tube outer surface to the deeper part during brazing. Si diffused into the deeper part of the tube reacts with solid-soluted Mn in the tube mother phase to form fine Al-Mn-Si-based precipitated product. Therefore, the region where Si diffuse in the vicinity of the tube outer surface has less-noble potential than that of the deeper part of the tube due to the lower solid solubility of Mn, resulting in exhibiting a sacrificial corrosion protection effect. This allows the extruded aluminum alloy tubes for the heat exchanger according to the present invention to have high corrosion resistance by subjecting to brazing. The potential difference generated here is smaller than the potential difference formed by Zn diffusion. However, a sufficient sacrificial corrosion protection effect is exhibited under a relatively minor corrosive environment.

From the above result, the extruded aluminum alloy tube for a heat exchanger according to the present invention does not melt at the outer surface during brazing and thus strength is high even when the wall thickness is thin. In addition, the sacrificial corrosion protection effect is exhibited by lowering the amount of the solid solution of Mn at the outer surface side and thus a certain level or more of corrosion resistance is provided even when the tube alone is used.

In the extruded aluminum alloy tube for a heat exchanger, brazing can be performed immediately after the Al-Si alloy powder melting by previously breaking down the oxide film on the surface of the Al-Si alloy brazing powder and the oxide film on the tube outer surface during brazing by the Zn-free fluoride-based flux powder comprised in the coating film.

In the case of the heat exchanger obtained by brazing the tube comprising a pure Zn powder or the like in the coating film, Zn in the melted brazing substance is concentrated during fillet formation and the potential of the fillet becomes most less-noble. In this case, the fillet part corrosion most quickly proceeds when the heat exchanger is exposed to a corrosive environment and thus the fins fall off from the tube by the disappearance of the fillet. As a result, heat exchange performance significantly deteriorates and furthermore, the tube is likely to cause tube penetration in an early stage because the corrosion protection action for the tube due to the fins is lost.

In contrast, the extruded aluminum alloy tube for a heat exchanger according to the present invention does not includes Zn at the tube surface and in the coating film and thus Zn is not concentrated in the fillets formed by brazing. Therefore, in the heat exchanger obtained by brazing the extruded aluminum alloy tube for a heat exchanger according to the present invention, the fillets do not preferentially corrode and thus the fins do not fall off from the tube surface over a long period of time. Consequently, not only can the deterioration in the heat exchange performance be prevented but also a long-term corrosion protection effect for the tube by the fins can be obtained. From the results as described above, the extruded aluminum alloy tube for a heat exchanger according to the present invention has excellent corrosion resistance.

The heat exchanger according to the present invention is a heat exchanger comprising a brazing joint product of the aluminum alloy extruded tube for the heat exchanger according to the present invention and fins made of an aluminum alloy comprising Zn, in which an average grain size of the aluminum alloy forming the tube main body is 150 µm or more.

The heat exchanger according to the present invention is a heat exchanger formed by brazing-jointing the extruded aluminum alloy tube for a heat exchanger according to the present invention and the fins formed of the aluminum alloy comprising Zn.

The fins formed of the aluminum alloy comprising Zn for the heat exchanger according to the present invention are formed of the aluminum alloy. The aluminum alloy forming the fin material is not particularly limited as long as the aluminum alloy has sufficient strength and corrosion resistance for the heat exchanger. Examples of the aluminum alloy include an aluminum alloy having a Mn content of 0.8 to 1.5 mass %, a Zn content of 0.5 to 2.5 mass %, and a Cu content of 0.20 mass % or less, with the balance being Al and inevitable impurities. The fins formed of the aluminum alloy comprising Zn for the heat exchanger according to the present invention may be any known fins as long as these fins have sufficient strength and corrosion resistance for the heat exchanger.

The heat exchanger according to the present invention is prepared by contacting and jointing the fins formed of the aluminum alloy comprising Zn to the extruded aluminum alloy tube for a heat exchanger according to the present invention, thereafter assembling other components such as the header, and heating to braze these components together. The heating temperature, heating time, and the atmosphere at the time of brazing are not particularly limited and the brazing method is also not particularly limited. The heating temperature for brazing is, for example, 590 to 610°C, the heating time for brazing is, for example, 15 to 45 minutes, and the atmosphere for brazing is, for example, a nitrogen gas atmosphere or an argon gas atmosphere.

The heat exchanger according to the present invention is a heat exchanger brazed using the extruded aluminum alloy tube for a heat exchanger according to the present invention as the tube material and thus the tube is jointed to the fins without reducing the tube wall thickness during brazing. Therefore, the heat exchanger according to the present invention has high strength even when the wall thickness is thin. The heat exchanger according to the present invention is formed by brazing using the extruded aluminum alloy tube for a heat exchanger according to the present invention as the tube material and thus the fins are difficult to fall off over a long period of time because Zn concentration in the fillets is difficult to occur during brazing. Consequently, the heat exchanger has excellent corrosion resistance due to the corrosion protection provided by the fins.

Hereinafter, the present invention will be described in detail with reference to Example. However, the invention is not limited to Example described below.

### [Example]

### <Tube preparation>

Billets having the chemical compositions listed in Table 1 were heated at 600°C for 10 hours to perform homogenization treatment and thereafter the billets for which the homogenization treatment was completed were cooled to room temperature. Subsequently, the billets were reheated to 450°C and hot extrusion was performed to prepare a tube main body indicating a shape in which the cross section perpendicular to the extrusion direction was flat and provided with a plurality of coolant channels.

An Al-Si alloy brazing material powder, a Zn-free fluoride-based flux powder, and a binder were mixed in a solvent to prepare a paste for coating film formation. Subsequently, the resultant paste was applied to the flat surface of the above tube main body using a roll coater to form a coating film having the coating amount listed in Table 2 to give an extruded aluminum alloy tube for a heat exchanger on which a coating film was formed.
· Al-Si alloy brazing material powder: Si content 12.0 mass %
· Zn-free fluoride-based flux powder: K-Al-F-based flux, Zn was less than the detection limit in Zn analysis by electron beam microanalyzer.
· Binder: Acrylic resin

### <Fin preparation>

A sheet material having a thickness of 0.1 mm and formed of an aluminum alloy including Mn of 1.2 mass % and Zn of 1.5 mass % was subjected to corrugation to prepare fins having a corrugated shape. The fin pitch was 3 mm and the fin height was 7 mm.

### <Mini-core preparation and heating test>

As illustrated in FIG. 1, the fins were stacked so that the top and bottom of the fins were sandwiched between tubes and assembled into a predetermined shape. The tubes and the fins were heated in a nitrogen gas atmosphere in this state. The temperature was raised up to 500°C at an average temperature rising rate of 30°C/min and up to 600°C at an average temperature rising rate of 10°C/min in the temperature range of 500°C or more, held at 600°C for 3 minutes, and then cooled to room temperature to perform brazing, whereby the tubes and the fins were jointed to give a mini-core simulating a heat exchanger.

Brazeability was evaluated using the resultant mini-core. The results are listed in Table 3.

The thermal history for mini-core preparation corresponded to the thermal history of the heating test.

### <Evaluation of average grain size and after heating test and evaluation of brazeability>

The cross section of the tube after brazing was observed, etching was performed, and the average grain size was measured. Measurement was performed by electropolishing the test specimen, thereafter obtaining microscopic images of each cross-section using a polarizing microscope at a magnification of 100 times, and measuring the equivalent circular diameter.

The bonding condition of the fins, the presence or absence of appearance defects such as discoloration, the presence or absence of fin melting, and the presence or absence of erosion on the tube surface were also confirmed by visual observation.

### <Evaluation of corrosion resistance>

Each test specimen was subjected to the SWAAT test specified in ASTM-G85-Annex A3 for 960 hours. Presence or absence of peeling of the fins was determined by visual observation of the test material after completion of the test.

**[Table 1]**

| | (Mass %) | | |
|---|---|---|---|
| Alloy No. | Mn | Ti | Al |
| 1 | 0.70 | 0.01 | Balance |
| 2 | 1.00 | 0.01 | Balance |

**[Table 2]**

| | Ai-Si Brazing material powder | Flux powder | Binder |
|---|---|---|---|
| Coating film No. | (g/m²) | (g/m²) | (g/m²) |
| I | 12.0 | 4.0 | 2.8 |
| II | 15.0 | 2.0 | 5.0 |
| III | 9.0 | 3.0 | 2.1 |

**[Table 3]**

| | | Example 1 | Comparative Example 1 | Comparative Example 2 | Comparative Example 3 |
|---|---|---|---|---|---|
| Alloy No. | | 1 | 1 | 1 | 2 |
| Coating film No. | | I | II | III | I |
| Structure after brazing | | | | | |
| | Average grain size (µm) | 400 or more | 400 or more | 400 or more | 120 |
| | Determination | ○ | ○ | ○ | × |
| Brazability | | | | | |
| | Brazing defect | Absence | Not jointed | Not jointed | Jointed |
| | Erosion | Absence | | | Presence |
| Determination | ○ | × | × | × | |
| Corrosion resistance | | | | | |
| Fin peeling | Absence | - | - | Absence | |
| Determination | ○ | - | - | ○ | |

### <Results of evaluation>

Example 1 in the present invention was acceptable because the average grain size after brazing was 400 µm or more, which was sufficiently large, no brazing defects occurred, and no erosion occurred. The wall thickness of the tube after brazing was not significantly different from the wall thickness before brazing and thus no significant melting was confirmed. As the results of corrosion resistance tests, no fin peeling occurred and the test specimen had excellent corrosion resistance.

On the other hand, Comparative Example 1 was unacceptable because although the average grain size after brazing was sufficiently large, the oxide film breakdown of the Al-Si alloy brazing material powder and the tube outer surface was insufficient due to shortage of the flux powder and thus fillets were not formed.

Similarly, Comparative Example 2 was unacceptable because although the average grain size after brazing was sufficiently large, the sufficient fillets were not formed due to shortage of the Al-Si alloy brazing material powder.

In Comparative Example 3, the average grain size after brazing was as small as 120 µm and erosion occurred around the fillets after brazing. Although the fillets were formed, the size of the fillets was small and the bonding strength of the fins was insufficient and thus peeling of the fins during actual use might occur in an early stage. Consequently, Comparative Example 3 was determined to be unacceptable. In the results of the corrosion resistance test, excellent corrosion resistance was exhibited because no fin peeling occurred.

Here, the corrosion resistance test was conducted only in Example 1 and Comparative Example 3 in which the fins and the tubes were jointed.

## Claims

1. An extruded aluminum alloy tube for a heat exchanger that is an extruded tube formed of an aluminum alloy used for an automotive heat exchanger, the extruded aluminum alloy tube comprising:
a tube main body formed of an aluminum alloy comprising Mn; and
a coating film formed on a surface of the tube main body, wherein
the coating film comprises an Al-Si alloy brazing material powder, a Zn-free fluoride-based flux powder, and a binder, and
an average grain size of the tube main body after a heating test is 150 µm or more in the heating test in which the average grain size is measured after the extruded aluminum alloy tube is maintained at 600°C ± 10°C for 3 minutes and cooled to room temperature.

2. The extruded aluminum alloy tube for a heat exchanger according to claim 1, wherein the aluminum alloy comprising Mn comprises 0.20 mass % to 0.90 mass % of Mn and has a Ti content of 0.10 mass % or less, with a balance being Al and inevitable impurities.

3. The extruded aluminum alloy tube for a heat exchanger according to claim 1 or 2, wherein an applied amount of the Al-Si alloy brazing material powder is 10.0 to 25.0 g/m², an applied amount of the Zn-free fluoride-based flux powder is 3.0 to 12.0 g/m², and an applied amount of the binder is 1.0 to 13.0 g/m².

4. A heat exchanger comprising:
a brazing joint product of the extruded aluminum alloy tube for a heat exchanger according to any one of claims 1 to 3 and fins formed of an aluminum alloy comprising Zn, wherein
an average grain size of the aluminum alloy forming the tube main body is 150 µm or more.
